# EUROPÄISCHE PATENTSCHRIFT

(11) **EP 0 673 738 B1**
(45) Veröffentlichungstag und Bekanntmachung des Hinweises auf die Patenterteilung: **06.10.1999**
(21) Anmeldenummer: 95104289.4
(22) Anmeldetag: 23.03.1995
(51) Int. Cl.: B29C 39/10, B29C 33/00

(54) **Aus einem Kunststoffmaterial gegossene Einbauspüle mit Einlegeteil, und Verfahren zu seiner Herstellung**
Moulded fitted sink of plastic material with insert, and method of manufacturing the same
Evier moulé à encastrer avec pièce d'insertion, et procédé pour sa fabrication

(30) Priorität: 26.03.1994 DE 4410527; 21.05.1994 DE 4417969
(43) Veröffentlichungstag der Anmeldung: 27.09.1995
(73) Patentinhaber: Blanco GmbH & Co. KG, D-75038 Oberderdingen (DE)
(72) Erfinder: Strobel, Gerd, D-81739 München (DE); Maier, Uwe, verstorben (DE); Wilhelm, Thomas, Dr., D-75056 Sulzfeld (DE)
(74) Vertreter: Hoeger, Stellrecht & Partner

(56) Entgegenhaltungen:
- EP-A- 0 229 262
- EP-A- 0 458 016
- DE-B- 1 166 679
- FR-A- 1 598 374
- FR-A- 2 509 986
- FR-A- 2 688 102
- GB-A- 2 214 127
- PATENT ABSTRACTS OF JAPAN vol. 008 no. 016 (M-270) ,24.Januar 1984 & JP-A-58 177335 (TOMOE GIJUTSU KENKYUSHO:KK) 18.Oktober 1983,
- PATENT ABSTRACTS OF JAPAN vol. 009 no. 029 (M-356) ,7.Februar 1985 & JP-A-59 174333 (CITIZEN TOKEI KK;OTHERS: 01) 2.Oktober 1984,
- PATENT ABSTRACTS OF JAPAN vol. 012 no. 428 (M-762) ,11.November 1988 & JP-A-63 162210 (HASHIMOTO FORMING CO LTD) 5.Juli 1988,
- PATENT ABSTRACTS OF JAPAN vol. 13 no. 449 (M-878) ,9.Oktober 1989 & JP-A-01 174426 (MEIJI RUBBER KASEI K K) 11.Juli 1989,
- PATENT ABSTRACTS OF JAPAN vol. 008 no. 262 (M-341) ,30.November 1984 & JP-A-59 133030 (MATSUSHITA DENKI SANGYO KK) 31.Juli 1984,

## Beschreibung

Die Erfindung betrifft eine aus einem Kunststoffmaterial, welches mindestens ein Gießharz und Füllstoff enthält, gegossene Einbauspüle mit einem in das Kunststoffmaterial eingebetteten Einlegeteil gemäß dem Oberbegriff des Anspruchs 1; ferner betrifft die Erfindung ein Verfahren zur Herstellung einer solchen Einbauspüle, gemäß dem Oberbegriff des Anspruchs 8.

Gegossene Kunststoff-Einbauspülen dieser Art gehören ebenso zum Stand der Technik wie Verfahren der vorstehend geschilderten Art.

Gegossene, herkömmliche Kunststoff-Spülen müssen nach dem Gießen und Aushärten des Kunststoffmaterials mechanisch nachbearbeitet werden; an solchen Spülen wird später z. B. eine Wasser-Auslaßarmatur oder eine Mischbatterie angebracht, und hierzu ist es erforderlich, in der Spüle ein hinsichtlich seiner Lage und Abmessung sehr präzises Loch herzustellen. Gleiches gilt für das Anbringen des Wasserablaufs, der sogenannten Ablaufgarnitur.

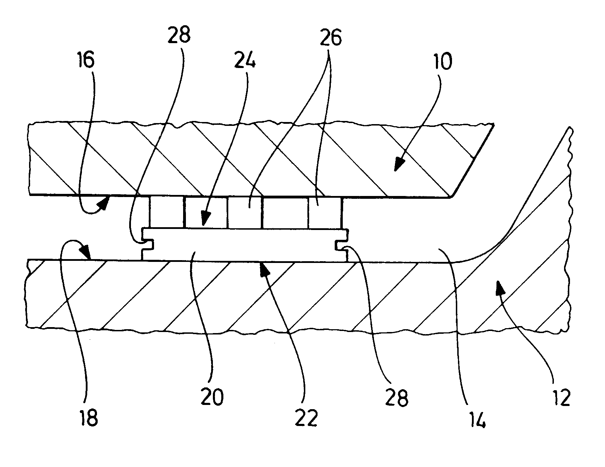

Aus der EP-A-0 229 262 geht eine Küchenspüle hervor, welche im wesentlichen aus einem aus einem aushärtbaren Kunststoffmaterial geformten Spülenkörper besteht, in den ein plattenartiger Einsatz eingebettet ist, dessen Oberseite einen Teil der Sichtseite der Spüle bildet, und zwar eine bei Benutzung der Spüle beanspruchte Arbeitsfläche, welche mit den sie umgebenden Bereichen der Sichtseite des Spülenkörpers bündig ist; damit diese Arbeitsfläche den bei der Benutzung der Spüle auftretenden Beanspruchungen widerstehen kann oder im Zuge der Benutzung der Spüle in der Arbeitsfläche entstehende Oberflächendefekte verhältnismäßig leicht beseitigt werden können, besteht dieser Einsatz aus einem Werkstoff, welcher härter bzw. weicher ist als das ausgehärtete Kunststoffmaterial des Spülenkörpers. Bei der Herstellung dieser bekannten Spüle wird der die Arbeitsfläche bildende Einsatz entweder in den ausgehärteten Spülenkörper eingeklebt (Ausführungsformen nach den Figuren 1 - 7), oder wird der Einsatz an seiner (bei fertiger Spüle) freiliegenden Oberseite mit einer solchen Kontur versehen, daß der Einsatz beim Formen des Spülenkörpers durch das dabei verwendete Formwerkzeug lagefixiert wird (Ausführungsformen nach den Figuren 8 - 12).

Durch die vorliegende Erfindung soll eine aus einem Kunststoffmaterial gegossene Einbauspüle geschaffen werden, welche einerseits Vorteile bieten kann, die das für die Spülenherstellung verwendete Kunststoffmaterial nicht aufweist, und welche sich andererseits leicht herstellen läßt.

Zur Lösung dieser Aufgabe wird von einer Spüle ausgegangen, wie sie die EP-A-0 229 262 beschreibt, nämlich von einer aus einem Kunststoffmaterial, welches mindestens ein Gießharz und Füllstoff enthält, gegossenen Einbauspüle, die zwischen zwei einander gegenüberliegenden Hauptoberflächen eine Wandstärke aufweist, welche mindestens in einem bestimmten Bereich der Einbauspüle nur ein Bruchteil der sonstigen Außenabmessungen, nämlich der Länge oder Breite oder des Durchmessers der Einbauspüle, ist, mit einem in diesem bestimmten Bereich in das Kunststoffmaterial eingebetteten Einlegeteil, dessen eine Seite eine freiliegende Frontseite bildet und mit einer ersten, eine Sichtseite der Einbauspüle bildenden Hauptoberfläche der Einbauspüle bündig ist; erfindungsgemäß wird eine solche Einbauspüle so ausgebildet, daS auf der der Frontseite des Einlegeteils gegenüberliegenden Einlegeteil-Rückseite im Kunststoffmaterial der Einbauspüle wenigstens eine, sich von der Einlegeteil-Rückseite bis zur anderen, zweiten Hauptoberfläche der Einbauspüle erstreckende Aussparung zur Aufnahme eines elastischen Abstützelements für das Einlegeteil vorgesehen ist. Die oben genannte Aufgabe wird erfindungsgemäß desweiteren durch das im Anspruch 8 beschriebene Verfahren gelost. Bei der Herstellung einer solchen Einbauspüle in einer Gießform wird das Einlegeteil durch das wenigstens eine elastische Abstützelement lagefixiert, während der Formhohlraum der Gießform mit dem die eigentliche Einbauspüle bildenden Kunststoffmaterial gefüllt und dieses ausgehärtet wird, und zwar unabhängig von der Kontur der Frontseite des Einlegeteils.

Zweckmäßige Weiterbildungen der Erfindung sind Gegenstand der abhängigen Ansprüche.

Da für das Einlegeteil ein anderer Werkstoff als das Kunststoffmaterial der Einbauspüle verwendet werden kann und vorzugsweise verwendet wird, kann ein solches Einlegeteil vielfältige technische Funktionen übernehmen, so z. B. die Funktion einer Montagebasis für eine Mischbatterie, gleichzeitig oder alternativ kann das Einlegeteil aber auch dekorativen Charakter haben, wenn es aus einem Werkstoff besteht, der sich in seinem Aussehen markant von dem Kunststoffmaterial abhebt, aus dem die Einbauspüle gegossen wurde. Die einzige Anforderung, die an den Werkstoff des Einlegeteils gestellt werden muß, ist, daS er von der Gießmasse für die Einbauspüle chemisch nicht angegriffen wird. Bevorzugt besteht das Einlegeteil aus einem anorganischen Werkstoff und insbesondere aus einem besonders dekorativen Material, wie Messing, Edelstahl oder Keramik. Mit einem solchen Einlegeteil läßt sich eine Einbauspüle auch in besonders dekorativer Weise individualisieren, indem das Einlegeteil z. B. an seiner Sichtseite mit Kennzeichnungen versehen wird oder gar solche bildet - als solche Kennzeichnungen kommen z. B. in Frage Embleme, Namensschriftzüge, Initialen oder geometrische Figuren.

Aus der GB-A-2 214 127 gehen aus einem Kunststoffmaterial gegossene Einbauspülen hervor, welche mit der Befestigung der Einbauspülen dienenden, in die Unterseite des eigentlichen Spülenkörpers eingebetteten Einlegeteilen versehen sind; diese Einlegeteile haben entweder eine solche Kontur, daß sie beim Gießen der eigentlichen Spüle durch die eine entsprechende Kontur aufweisende Formhohlraumwand des Gießwerkzeugs lagefixiert werden, oder bestehen die Einlegeteile mindestens zum Teil aus einem ferromagnetischen Werkstoff und werden durch einen am Gießwerkzeug vorgesehenen Magneten gegen die Gießwerkzeug-Formhohlraumwand gezogen und dadurch lagefixiert.

Aus völlig anderen Gebieten der Technik ist noch folgendes bekannt:

Die DE-B-1 166 679 beschreibt ein Verfahren zur Herstellung einer Bauplatte für Bauwerke, z. B. die Herstellung einer Wand- oder Fußbodenplatte, in der elektrische Leitungen oder Leitungsrohre verlaufen sollen. Die Bauplatte wird als gegossenes Formteil zwischen zwei Formhälften hergestellt, wobei eine Dose und ein von letzterer gehaltener Geräte-Tragring in der gegossenen Bauplatte verbleiben sollen; beim Gießen der Bauplatte befinden sich diese Dose und dieser Tragring in einem gewissen Abstand von der einen Formhälfte, gegen die eine später aus der Bauplatte zu entfernende sogenannte Marke anliegt, welche sich innerhalb der Dose befindet und der Halterung eines die Dosenwand durchdringenden Stabs oder Leitungsrohrs dient. Diese Marke hat einen die Dosenrückwand durchsetzenden und in Richtung auf die andere Formhälfte weisenden stiftartigen Vorsprung, über den teleskopartig eine Stütze geschoben ist, die sich gegen die zweite Formhälfte abstützt und über eine Schraubenfeder auf die Marke so einwirkt, daß diese gegen die erste Formhälfte angepreßt wird. Nach dem Aushärten der Bauplatte werden sowohl die Marke, als auch die Stütze aus der Bauplatte entfernt.

Aus der EP-A-0 458 016 ergibt sich ein Verfahren zur Herstellung einer plattenartigen Anzeige mit einem aus Gummimaterial vulkanisierten Plattenkörper, in den im Abstand voneinander mehrere plättchenartige LCD oder LED Anzeigeelemente eingebettet sind, und zwar derart, daß zwar die beiden Hauptoberflächen eines jeden Anzeigeelements parallel zu den beiden Hauptoberflächen des Plattenkörpers verlaufen, gegenüber den Plattenkörper-Hauptoberflächen jedoch zurückgesetzt sind. Zur Herstellung einer solchen plattenartigen Anzeige wird ein Formwerkzeug mit einer ersten, unteren und einer zweiten, oberen Formhälfte verwendet, von denen die untere Formhälfte für jedes Anzeigeelement eine Aussparung zum Einsetzen zweier das Anzeigeelement tragenden Abstützelemente aufweist. Von diesen wird zunächst ein erstes, unteres und elastisches Abstützelement in die Aussparung eingelegt und dann auf dieses das zweite Abstützelement aufgelegt, bei dem es sich um einen starren und in der Aussparung verschiebbar geführten Körper handelt. Das Anzeigeelement wird an seinem Umfang und an seiner Unterseite mit einem Material beschichtet, welches sich beim Vulkanisieren des Plattenkörpers mit diesem verbindet, und das beschichtete Anzeigeelement wird auf das obere Abstützelement aufgelegt. Sodann wird das den Plattenkörper bildende Gummimaterial zwischen die beiden Formhälften gegeben, worauf die Formhälften zusammengepreßt und das Gummimaterial vulkanisiert wird.

Aus der JP-A-59-174333 ergibt sich ein Verfahren zur Herstellung eines Kunststoff-Uhrenarmbandes, in welches ein dekoratives Einlegeteil eingebettet ist. Dieses Einlegeteil ist mit seiner Sichtseite mit der Außenseite des Armbandes bündig und besitzt einen sich von seiner Rückseite weg erstreckenden Fixierstift, der in eine Führungsbohrung des zur Herstellung des Armbandes verwendeten Formwerkzeugs eingreift und durch ein in der Wandung des Formwerkzeugs angeordnetes, gefedertes Element mit Druck beaufschlagt wird, um die Sichtseite des Einlegeteils gegen die Wand des Formhohlraums des Formwerkzeugs zu pressen.

Schließlich ergibt sich aus der JP-A-58-177335 ein Verfahren zur Herstellung eines Rings für eine Ventilvorrichtung, welcher einen ringförmigen metallischen Kern und einen im Spritzgußverfahren hergestellten elastomeren Mantel aufweist. Dieser Ring wird in einem ringförmigen Formhohlraum hergestellt, in den der metallische Kern eingelegt und dann das elastomere Mantelmaterial eingespritzt wird. Damit der metallische Kern zum Spritzgießen des elastomeren Mantels im ringförmigen Formhohlraum lagefixiert ist, werden zwischen der äußeren Formhohlraumwand und dem metallischen Kern - über den Außenumfang des letzteren verteilt - mehrere elastische Abstützelemente angeordnet, welche nach dem Spritzgießen des elastomeren Mantels in diesem verbleiben.

Da es nur darauf ankommt, daß beim Gießen der Einbauspüle keine Gießmasse vor die Frontseite des Einlegeteils gelangen kann, kann es ausreichend sein, an einem der Gießformteile eine Feder oder dergleichen anzubringen, welche bei geschlossener Gießform in die erfindungsgemäß im Kunststoffmaterial vorgesehene Aussparung eingreift, auf die Rückseite des Einlegeteils einwirkt und dieses mit seiner Frontseite gegen die Formfläche des anderen Gießformteiles anpreßt. Bevorzugt werden aber Ausführungsformen, bei denen das Abstützelement in der Einbauspüle verbleibt, als Körper aus einem elastomeren Material ausgebildet und gleichfalls in das Kunststoffmaterial eingebettet ist sowie sich von der Rückseite des Einlegeteils bis zur zweiten Hauptoberfläche (Rückseite) der Einbauspüle erstreckt, weil dann in ein und derselben Gießform gleichgestaltete Einbauspülen hergestellt werden können, sei es mit oder ohne Einlegeteil.

Damit sich im Gebrauch der Einbauspüle das Einlegeteil mit Sicherheit nicht lösen kann, empfehlen sich schließlich Ausführungsformen, bei denen das Einlegeteil zwischen seiner Front- und seiner Rückseite mit Verankerungsmittel bildenden Oberflächenprofilierungen versehen ist, insbesondere mit einer oder mehreren Nuten im Bereich der quer zur Einlegeteil-Frontseite verlaufenden Flächen des Einlegeteils, wobei diese Nuten vorzugsweise ungefähr parallel zur Einlegeteil-Frontseite verlaufen, um einen absolut sicheren Verankerungseffekt zu bewirken.

Bei Verwendung eines Einlegeteils mit integriertem Abstützelement bzw. integrierten Abstützelementen empfiehlt es sich, ein Verfahren der eingangs erwähnten Art so zu gestalten, daß das Einlegeteil samt Abstützelement bei geöffneter Gießform in diese eingebracht und mit seiner Frontseite gegen die die erste Hauptoberfläche der Einbauspüle formende Formfläche angelegt sowie dann gegen letztere durch Zusammenfahren der beiden Gießformteile angepreßt wird (und zwar vermittels des Abstützelements bzw. der Abstützelemente), worauf eine Gießmasse in die Gießform eingefüllt und anschließend ausgehärtet wird.

Weitere Merkmale bevorzugter Ausführungsformen ergeben sich aus den Ansprüchen 3, 4, 6 und 7.

Ein Ausführungs beispiel der Erfindung ergibt, sich aus der nachfolgenden Beschreibung sowie der beigefügten Zeichnung, welche im Schnitt einen Teil einer Gießform zur Herstellung einer erfindungsgemäßen Einbauspüle zeigt, und zwar bei geschlossener Gießform, in die ein plattenförmiges Einlegeteil samt an diesem angebrachten Abstützelementen eingebracht wurde, jedoch noch nicht die Gießmasse, aus der die eigentliche Einbauspüle hergestellt wird.

Die Zeichnung zeigt ein erstes und ein zweites Gießformteil 10 bzw. 12, die zusammen oder gegebenenfalls zusammen mit weiteren, nicht dargestellten Gießformteilen eine Gießform bilden, welche im geschlossenen Zustand einen Formhohlraum 14 definiert, dessen Gestalt derjenigen der zu gießenden Einbauspüle entspricht. Das Gießformteil 10 hat eine den Formhohlraum 14 begrenzende Formfläche 16, das Gießformteil 12 eine den Formhohlraum 14 begrenzende Formfläche 18, und für das Folgende soll davon ausgegangen werden, daß die Formfläche 18 die Sichtseite der herzustellenden Einbauspüle formt.

Gegen die Formfläche 18 liegt ein z. B. plattenförmiges Einlegeteil 20 mit seiner Frontseite 22 an, während an seiner Rückseite 24 im Abstand voneinander mehrere Abstützelemente 26 befestigt sind, z. B. mittels eines geeigneten Klebstoffs. Die Frontseite 22 des Einlegeteils 20 muß zumindest in ihrem Randbereich so gestaltet sein, daß dieser Randbereich dicht gegen die Formfläche 18 angelegt werden kann, und die Abstützelemente 26 sind in Richtung senkrecht zur Formfläche 16 so dimensioniert, daß sie beim Schließen der Gießform zusammengepreßt werden - diesen Zustand der Abstützelemente 26 soll die Zeichnung darstellen.

Schließlich besitzt das Einlegeteil 20 an seinen Kantenflächen senkrecht zur Zeichnungsebene verlaufende Nuten 28, die dafür sorgen, daß das Einlegeteil in dem zu gießenden Formteil gut verankert wird.

Selbstverständlich muß die Wandstärke des Einlegeteils kleiner sein als die Wandstärke der später aus Kunststoffmaterial herzustellenden eigentlichen Einbauspüle in demjenigen Bereich, in dem das Einlegeteil angeordnet ist.

Mit Hilfe der Abstützelemente wird das Einlegeteil in der Gießform fixiert, wenn letztere vor dem Einfüllen der Gießmasse geschlossen und dabei die beiden Gießformteile 10, 12 einander angenähert werden; es ist also nur erforderlich, das Einlegeteil 20 bei geöffneter Gießform auf die gewünschte Stelle der Formfläche 18 aufzulegen und dann die Gießform zu schließen. Durch den von den Abstützelementen 26 bewirkten Anpreßdruck und die Anpassung der Frontseite 22 des Einlegeteils 20 an die Gestalt der Formfläche 18 wird verhindert, daß die in die Gießform eingefüllte flüssige Gießmasse unter die Frontseite 22 des Einlegeteils kriechen kann, und die Abstützelemente 26 erlauben es auch, die beiden Gießformteile 10 und 12 einander anzunähern, wenn die Gießmasse aushärtet und dabei schrumpft.

Statt Abstützelemente mit dem Einlegeteil zu verkleben, können die Abstützelemente natürlich auch nach Art von Pfropfen oder dergleichen in Bohrungen des Einlegeteils eingepreßt und so an diesem fixiert werden. Bevorzugt bestehen die Abstützelemente aus Gummi oder einem anderen Elastomer, es muß nur gewährleistet sein, daß die Abstützelemente gegenüber der Gießmasse chemisch beständig sind und daß durch das Material der Abstützelemente oder in diesem Material enthaltene Additive die Aushärtung der Gießmasse nicht negativ beeinflußt wird.

Bevorzugt werden ebene Flächen von in Rede stehenden Einbauspülen mit erfindungsgemäßen Einlegeteilen versehen.

Handelt es sich bei einem Einlegeteil um ein "zerklüftetes" Bauteil, wie dies z. B. bei Schriftzügen der Fall ist, darf es keine zu engen Zwischenräume aufweisen, damit diese beim Gießen des eigentlichen Formteils durch die Gießmasse ausgefüllt werden können, welche zwischen den Abstützelementen hindurch von hinten in diese Zwischenräume eindringen kann. Entsprechendes gilt für andere Einlegeteile mit einer zerklüfteten Struktur.

Es versteht sich von selbst, daß nach dem Gießen der Einbauspüle der in der Zeichnung dargestellte Formhohlraum 14 mit der ausgehärteten Gießmasse ausgefüllt ist, und zwar bis auf diejenigen Formhohlraumbereiche, die vom Einlegeteil 20 und den Abstützelementen 26 eingenommen werden. Die Frontseite der Einbauspüle entspricht dann der Formfläche 18, die Rückseite der Einbauspüle der Formfläche 16.

## Patentansprüche

1. Aus einem Kunststoffmaterial, welches mindestens ein Gießharz und Füllstoff enthält, gegossene Einbauspüle, die zwischen zwei einander gegenüberliegenden Hauptoberflächen eine Wandstärke aufweist, welche mindestens in einem bestimmten Bereich der Einbauspüle nur ein Bruchteil der sonstigen Außenabmessungen, nämlich Länge und Breite oder Durchmesser der Einbauspüle, ist, mit einem in diesem bestimmten Bereich in das Kunststoffmaterial eingebetteten Einlegeteil (20), dessen eine Seite eine freiliegende Frontseite bildet und mit einer ersten, eine Sichtseite der Einbauspüle bildenden Hauptoberfläche der Einbauspüle bündig ist, **dadurch gekennzeichnet**, daß auf der der Frontseite (22) des Einlegeteils (20) gegenüberliegenden Einlegeteil-Rückseite (24) im Kunststoffmaterial der Einbauspüle wenigstens eine, sich von der Einlegeteil-Rückseite (24) bis zur anderen, zweiten Hauptoberfläche der Einbauspüle erstreckende Aussparung zur Aufnahme eines elastischen Abstützelements (26) für das Einlegeteil (20) vorgesehen ist.

2. Einbauspüle nach Anspruch 1, dadurch gekennzeichnet, daß das Abstützelement (26) als Körper aus einem elastomeren Material ausgebildet und gleichfalls in das Kunststoffmaterial eingebettet ist sowie sich von der Rückseite (24) des Einlegeteils (20) bis zur zweiten Hauptoberfläche der Einbauspüle erstreckt.

3. Einbauspüle nach Anspruch 2, dadurch gekennzeichnet, daß die Einbauspüle zwischen ihrer zweiten Hauptoberfläche und der Rückseite (24) des Einlegeteils (20) mehrere, über das letztere verteilt angeordnete Aussparungen im Kunststoffmaterial sowie in diesen angeordnete Abstützelemente (26) aufweist.

4. Einbauspüle nach einem oder mehreren der vorstehenden Ansprüche, dadurch gekennzeichnet, daß das Abstützelement bzw. die Abstützelemente (26) derart ausgebildet und angeordnet ist bzw. sind, daß es bzw. sie beim Gießen der Einbauspüle ein Einfließen der Gießmasse von der Rückseite (24) des Einlegeteils (20) her in von letzterem gebildete Hohlräume zuläßt bzw. zulassen.

5. Einbauspüle nach einem oder mehreren der vorstehenden Ansprüche, dadurch gekennzeichnet, daß das Einlegeteil (20) zwischen seiner Front- und seiner Rückseite (22 bzw. 24) mit Verankerungsmittel bildenden Oberflächenprofilierungen (28) versehen ist.

6. Einbauspüle nach einem oder mehreren der Ansprüche 2 bis 5, dadurch gekennzeichnet, daß das Abstützelement (26) an der Rückseite (24) des Einlegeteils (20) befestigt ist.

7. Einbauspüle nach einem oder mehreren der vorstehenden Ansprüche, dadurch gekennzeichnet, daß das Einlegeteil (20) aus einem anorganischen Werkstoff, insbesondere aus einem dekorativen Material, vorzugsweise aus Messing, Edelstahl oder Keramik, besteht.

8. Verfahren zur Herstellung einer Einbauspüle nach einem oder mehreren der Ansprüche 2 bis 7 mittels einer Gießform (10, 12), die einen der Gestalt der Einbauspüle entsprechenden Hohlraum (14) definiert und mindestens zwei Gießformteile (10, 12) umfaßt, deren dem Hohlraum zugekehrte Formflächen (16, 18) den beiden Hauptoberflächen der herzustellenden Einbauspüle angepaßt und welche im Sinne eines Öffnens und Schließens der Gießform quer zu diesen Formflächen relativ zueinander bewegbar sind, dadurch gekennzeichnet, daß das Einlegeteil (20) samt elastischen Abstützelement (26) bei geöffneter Gießform in diese eingebracht und mit seiner Frontseite (22) gegen die die erste Hauptoberfläche der Einbauspüle formende Formfläche (18) angelegt sowie dann gegen letztere durch Zusammenfahren der beiden Gießformteile (10, 12) angepreßt wird, worauf eine Gießmasse in die Gießform eingefüllt und anschließend ausgehärtet wird.

## Claims

1. Built-in sink cast from a plastic material containing at least a casting resin and filler, said built-in sink having between two main surfaces located opposite each other a wall thickness which at least in a specific area of said built-in sink is only a fraction of the other outer dimensions, namely length and width or diameter of said built-in sink, said built-in sink comprising an insert (20) embedded in the plastic material in this specific area, one side of said insert forming an exposed front side and being flush with a first main surface of said built-in sink which forms a visible side of said built-in sink, characterized in that at least one recess for receiving an elastic supporting element (26) for the insert (20) is provided in the plastic material of said built-in sink on the insert rear side (24) located opposite the front side (22) of the insert (20) and extends from the insert rear side (24) to the other second main surface of said built-in sink.

2. Built-in sink as defined in claim 1, characterized in that the supporting element (26) is constructed as a body made of an elastomeric material which is likewise embedded in the plastic material and extends from the rear side (24) of the insert (20) to the second main surface of said built-in sink.

3. Built-in sink as defined in claim 2, characterized in that said built-in sink has between its second main surface and the rear side (24) of the insert (20) several recesses arranged in the plastic material and distributed over said insert and supporting elements (26) arranged in said recesses.

4. Built-in sink as defined in any one or several of the preceding claims, characterized in that said supporting element or said supporting elements (26) is or are constructed and arranged such that it or they allows or allow the casting composition to flow in from the rear side (24) of the insert (20) into cavities formed by said insert when said built-in sink is being cast.

5. Built-in sink as defined in any one or several of the preceding claims, characterized in that the insert (20) is provided between its front side (22) and its rear side (24) with surface shapings (28) forming anchoring means.

6. Built-in sink as defined in any one or several of claims 2 to 5, characterized in that the supporting element (26) is attached to the rear side (24) of the insert (20).

7. Built-in sink as defined in any one or several of the preceding claims, characterized in that the insert (20) consists of an inorganic material, in particular, of a decorative material, preferably of brass, stainless steel or ceramics.

8. Method of manufacturing a built-in sink as defined in any one or several of claims 2 to 7 using a casting mould (10, 12) defining a cavity (14) which corresponds to the shape of the built-in sink and comprising at least two casting mould parts (10, 12) whose mould surfaces (16, 18) facing the cavity are adapted to the two main surfaces of the built-in sink to be manufactured, said two casting mould parts being movable relative to each other transversely to these mould surfaces for opening and closing the casting mould, characterized in that with the casting mould open, the insert (20) is placed together with the elastic supporting element (26) in the casting mould and positioned with its front side (22) against the mould surface (18) forming the first main surface of the built-in sink and is then pressed against said mould surface (18) by joining the two casting mould parts (10, 12) together, after which a casting composition is filled into the casting mould and then cured.

## Revendications

1. Evier à encastrer, moulé en une matière plastique comportant au moins une résine moulée et une masse de remplissage, lequel présente entre deux surfaces principales se faisant face une épaisseur de paroi qui représente au moins dans une région déterminée de l'évier à encastrer seulement une fraction des autres dimensions extérieures, à savoir de la longueur et de la largeur ou du diamètre de l'évier à encastrer, comportant une pièce d'insertion (20) noyée dans la matière plastique dans cette région déterminée, dont un côté forme une face frontale libre et affleure avec une première surface principale de l'évier formant la face visible de l'évier, caractérisé en ce qu'il est prévu dans la matière plastique de l'évier, sur la face arrière (24) de la pièce d'insertion (20) se trouvant à l'opposé de la face frontale (22) de la pièce d'insertion (20), au moins un évidement s'étendant depuis la face arrière (24) de la pièce d'insertion (20) jusqu'à l'autre deuxième surface principale de l'évier, pour recevoir un élément de soutien (26) élastique pour la pièce d'insertion (20).

2. Evier à encastrer selon la revendication 1, caractérisé en ce que l'élément de soutien (26) est réalisé sous forme de corps en un matériau élastomère et est également noyé dans la masse de matière plastique, et s'étend depuis la face arrière (24) de la pièce d'insertion (20) jusqu'à la deuxième surface principale de l'évier à encastrer.

3. Evier à encastrer selon la revendication 2, caractérisé en ce que l'évier présente, entre sa deuxième surface principale et la face arrière (24) de la pièce d'insertion (20), plusieurs évidements agencés de manière répartie dans la matière plastique ainsi que des éléments de soutien (26) agencés dans lesdits évidements.

4. Evier à encastrer selon l'une quelconque ou plusieurs des revendications précédentes, caractérisé en ce que le(s) élément(s) de soutien (26) est(sont) réalisé(s) et agencé(s) de telle manière qu'il(s) permet(tent) lors du moulage de l'évier un écoulement de la masse de moulage depuis de la face arrière (24) de la pièce d'insertion (20) dans des cavités formées par cette dernière.

5. Evier à encastrer selon l'une quelconque ou plusieurs des revendications précédentes, caractérisé en ce que la pièce d'insertion (20) est pourvue entre sa face frontale et sa face arrière (22 et 24, respectivement) de profils de surface (28) formant des moyens d'ancrage.

6. Evier à encastrer selon l'une quelconque ou plusieurs des revendications 2 à 5, caractérisé en ce que l'élément de soutien (26) est fixé sur la face arrière (24) de la partie d'insertion (20).

7. Evier à encastrer selon l'une quelconque ou plusieurs des revendications précédentes, caractérisé en ce que la pièce d'insertion (20) est formée par une substance minérale, en particulier un matériau décoratif, de préférence en laiton, acier noble ou céramique.

8. Procédé de fabrication d'un évier à encastrer selon l'une ou plusieurs des revendications 2 à 7, au moyen d'un moule (10, 12) qui définit une cavité (14) correspondant à la configuration de l'évier et qui comprend au moins deux pièces de moule (10, 12) dont les surfaces de moule (16, 18) orientées vers la cavité sont adaptées aux deux surfaces principales de l'évier à fabriquer et qui sont susceptibles d'être déplacées l'une par rapport à l'autre dans le sens d'une ouverture ou d'une fermeture du moule transversalement à ces surfaces de moulage, caractérisé en ce que la pièce d'insertion (20) avec l'élément de soutien élastique (26) est mise en place dans le moule lorsqu'il est ouvert et appliquée contre la surface du moule (18) formant la première surface principale de l'évier, et est pressée contre cette dernière en rapprochant les deux pièces de moule (10, 12), après quoi une masse de moulage est remplie dans le moule et ensuite durcie.
